# EUROPÄISCHE PATENTANMELDUNG

(11) **EP 1 973 016 A1**
(43) Veröffentlichungstag der Anmeldung: **24.09.2008**
(21) Anmeldenummer: 07005592.6
(22) Anmeldetag: 19.03.2007
(51) Int. Cl.: G05B 19/042, G05B 19/05, G06F 9/445

(54) **Verfahren zum Durchführen der Firmware eines Automatisierungsgerätes**

(71) Anmelder: SIEMENS AKTIENGESELLSCHAFT, 80333 München (DE)
(72) Erfinder: Biedermann, Andreas, 09125 Chemnitz (DE)

(57) **Zusammenfassung**

Es wird ein Verfahren zum Betrieb eines Automatisierungsgerätes mit einem Firmwarespeicher (24) und einem Arbeitsspeicher (26) angegeben, bei dem beim Start des Automatisierungsgerätes dieses mit einer Abarbeitung einer Firmware (28) aus dem Firmwarespeicher (24) beginnt, wobei im Zuge dieser Abarbeitung ein paralleles Kopieren der Firmware (28) in den Arbeitsspeicher (26) initiiert wird und nach Abschluss des Kopierens die Abarbeitung der Firmware (28) umgeschaltet wird, derart, dass sich die Abarbeitung nach der Umschaltung auf den Arbeitsspeicher (26) bezieht.

## Beschreibung

Die Erfindung betrifft ein Verfahren zum Betrieb eines Automatisierungsgerätes gemäß dem Oberbegriff des Anspruchs 1. Speziell bezieht sich die Erfindung auf Vorgänge beim Start des Automatisierungsgerätes, also z.B. beim Einschalten oder bei einer Wiederkehr der Versorgungsspannung oder wenn das Automatisierungsgerät durch Zurücksetzen (Reset) zu einem Neustart veranlasst wird. Diese und vergleichbare Situationen werden im Folgenden als Start des Automatisierungsgerätes bezeichnet.

Gattungsgemäße Automatisierungsgeräte, die beim Start mit der Abarbeitung einer in einem Firmwarespeicher vorgehaltenen Firmware aus dem Firmwarespeicher, z.B. einem ROM, insbesondere einem so genannten Flash-ROM, beginnen, sind allgemein bekannt.

Nicht optimal bei solchen Automatisierungsgeräten ist, dass die Abarbeitung der Firmware vom Firmwarespeicher in der Regel weniger performant als eine Abarbeitung vom Arbeitsspeicher aus ist. Dies liegt unter anderem an den Zugriffszeiten der jeweiligen Speicher. Die Abarbeitung im ROM erschwert auch die Möglichkeiten eines Firmware-Updates, da ein als Flash-ROM ausgeführter Firmwarespeicher nicht gleichzeitig gelesen und an anderer Stelle geschrieben werden kann. Aus den vorgenannten Gründen wird bei vielen Automatisierungsgeräten im Zusammenhang mit dessen Start die im Firmwarespeicher vorgehaltene und im Folgenden nur kurz als Firmware bezeichnete Betriebsfirmware von einer Boot-Firmware in den Arbeitsspeicher geladen. Nach dem Laden wird die Betriebsfirmware im Arbeitsspeicher von der Boot-Firmware angesprungen und dabei gestartet. Aufgrund der für den Kopiervorgang benötigten Zeit hat dieser Ansatz eine verzögerte Verfügbarkeit des Automatisierungsgerätes nach dem Start zur Folge.

Eine Aufgabe der Erfindung besteht entsprechend darin, ein Verfahren anzugeben, mit dem die o.g. Nachteile vermieden oder zumindest hinsichtlich ihrer Auswirkungen reduziert werden.

Diese Aufgabe wird erfindungsgemäß mit den Merkmalen des Anspruchs 1 gelöst. Danach ist bei einem Automatisierungsgerät mit einem Firmwarespeicher und einem Arbeitsspeicher als Verfahren zu dessen Betrieb vorgesehen, dass beim Start des Automatisierungsgerätes dieses mit einer Abarbeitung der Firmware aus dem Firmwarespeicher, also insbesondere einem ROM oder einem Flash-ROM, beginnt. Im Zuge dieser Abarbeitung wird ein paralleles Kopieren der Firmware in den Arbeitsspeicher initiiert. Nach Abschluss des Kopierens wird die Abarbeitung der Firmware umgeschaltet, derart, dass sich die Abarbeitung nach der Umschaltung auf den Arbeitsspeicher bezieht, d.h. dass die Firmware aus dem Arbeitsspeicher abgearbeitet wird. Der Vorteil der Erfindung besteht darin, dass mit dem Start des Automatisierungsgerätes unmittelbar mit der Abarbeitung der Firmware begonnen wird. Es wird also keine Zeit darauf verwendet, die Firmware zunächst in den Arbeitsspeicher zu kopieren, wodurch die Verfügbarkeit des Automatisierungsgerätes verzögert würde. Sodann wird parallel zur Abarbeitung der Firmware aus dem Firmwarespeicher mit einem Kopieren der Firmware in den Arbeitsspeicher begonnen. Mit der Verfügbarkeit der Firmware im Arbeitsspeicher, also nach Abschluss des Kopierens, wird die Abarbeitung der Firmware umgeschaltet, so dass die günstigeren Zugriffszeiten des Arbeitsspeichers ausgenutzt werden, wenn beim weiteren Betrieb des Automatisierungsgerätes die Firmware benutzt wird. Insgesamt vereint der Ansatz nach der Erfindung soweit irgendmöglich die Vorteile der bisherigen, prinzipiell nicht miteinander kombinierbaren Ansätze derart, dass die Verfügbarkeit des Automatisierungsgerätes nicht verzögert wird, wie dies auch bei einer Verwendung nur des Firmwarespeichers gegeben wäre, mit einer beschleunigten Ausführbarkeit von Firmware-Code, wie dies bei einem Ansatz, der ein vorheriges vollständiges Kopieren der Firmware in den Arbeitsspeicher erfordert, gegeben wäre.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass das Initiieren des parallelen Kopierens der Firmware in den Arbeitsspeicher den Start einer diesbezüglichen Kopiertask umfasst. Eine Task ist eine an sich bekannte Organisationsform eines Fragments eines Computerprogramms und erlaubt eine zumindest quasi-parallele Ausführung mit anderen Tasks. Dabei können zum Ausführen einer ersten Task, also z.B. der Kopiertask, Zeiten ausgenutzt werden, während derer eine andere Task oder höherrangige Funktionen, also z.B. Firmware-Funktionen, auf Ereignisse, z.B. das Eintreffen externer Signale oder dergleichen, warten.

Wenn die Kopiertask als Hintergrundtask, also als Task mit vergleichsweise geringer Priorität, gestartet wird, ist gewährleistet, dass die Abarbeitung der Firmware durch das parallele Kopieren kaum oder in einer zumindest für den menschlichen Bediener nicht merklichen Art und Weise verzögert wird.

Während des parallelen Kopierens der Firmware in den Arbeitsspeicher wird der Arbeitsspeicher oder ein vom parallelen Kopieren betroffener Teil des Arbeitsspeichers - im Folgenden zusammenfassend kurz als Arbeitsspeicher bezeichnet - in einen Adressbereich eingeblendet, der sich vom Adressbereich des Firmwarespeichers unterscheidet. Auf diese Art und Weise sind der Firmwarespeicher und der Arbeitsspeicher gleichzeitig für lesende bzw. schreibende Zugriffe verfügbar. Im Zusammenhang mit einem Abschluss des parallelen Kopierens wird der Arbeitsspeicher dann in den bis dahin vom Firmwarespeicher belegten Adressbereich eingeblendet. Für eine Verarbeitungseinheit des Automatisierungsgerätes, also z.B. einen Prozessor oder dergleichen, der Programmcodeanweisungen aus einem für die Verarbeitungseinheit zugänglichen Speicher in Ansehung eines so genannten Instruction-Pointers abarbeitet, bedeutet dies, dass der Instruction-Pointer, also ein Zeiger, der eine gerade abgearbeitete oder im nächsten Schritt abzuarbeitende Programmcodeanweisung referenziert, sich vor dem Einblenden des Arbeitsspeichers in den Adressbereich des Firmwarespeichers auf den Firmwarespeicher und nach dem Einblenden des Arbeitsspeichers in den Adressbereich des Firmwarespeicher auf den Arbeitsspeicher bezieht, so dass vor dem Einblenden die Firmware aus dem Firmwarespeicher und nach dem Einblenden die Firmware aus dem Arbeitsspeicher abgearbeitet wird, ohne dass es dabei zu einer merklichen Unterbrechung käme.

Das Einblenden des Arbeitsspeichers in den Adressbereich des Firmwarespeichers hat darüber hinaus den Vorteil, dass von der Firmware umfasste absolute Adressen, wie z.B. Ziele von Sprungbefehlen und dergleichen, nicht geändert werden müssen, weil nach dem Einblenden des Arbeitsspeichers in den Adressbereich des Firmwarespeichers die im Arbeitsspeicher gespeicherte Firmware an genau den gleichen Adressen vorgehalten wird, wie dies vorher für die im Firmwarespeicher vorgehaltene Firmware gegolten hat.

Wenn im Zusammenhang mit dem Einblenden des Arbeitsspeichers in den Adressbereich des Firmwarespeichers der Firmwarespeicher ausgeblendet wird, kann von einer echten Umschaltung gesprochen werden, derart, dass der Arbeitsspeicher oder dessen jeweils betroffener Bereich den Firmwarespeicher ersetzt, so dass sich nach einer solchen Umschaltung sämtliche Zugriffe ausschließlich auf den Arbeitsspeicher beziehen können.

Für die Umschaltung zwischen Firmwarespeicher und Arbeitsspeicher sieht die Erfindung verschiedene Alternativen vor. Zum einen kann danach ein für die Umschaltung vorgesehene Umschaltcode in einem Zusatzspeicher, z.B. einem so genannten Cache, vorgehalten sein und dort ausgeführt werden. Ein solcher Zusatzspeicher gehört für heute gebräuchliche Prozessoren zur Standardperipherie und ist teilweise sogar vom jeweiligen Bauelement, das die Funktionalität des Prozessors implementiert, umfasst. Solche Zusatzspeicher werden verwendet, um die Geschwindigkeit beim Abarbeiten von Programmcodeelementen durch den Prozessor zu erhöhen und erlauben z.B. das Laden von Programmcodeelementen aus dem Arbeitsspeicher parallel zur Abarbeitung eines anderen Programmcodeelementes durch den Prozessor, so dass nach Abschluss einer solchen Abarbeitung das nächste Programmcodeelement für den Prozessor unmittelbar, d.h. unter Umgehung der sich ansonsten erst zu diesem Zeitpunkt ergebenden Zugriffszeiten auf dem Arbeitsspeicher, zur Verfügung steht. Der erste Ansatz zum Vorhalten eines für die Umschaltung vorgesehenen Umschaltcodes sieht also die Verwendung eines solchen Zusatzspeichers vor, wobei der Vorteil vor allem darin besteht, dass der Zusatzspeicher sowohl vom Firmwarespeicher wie auch vom Arbeitsspeicher unabhängig ist und für den Prozessor in jedem Fall zugänglich bleibt, auch während eines Zeitabschnittes, während der Arbeitsspeicher seinen Adressbereich ändert, indem er in den Adressbereich, der zuvor vom Firmwarespeicher belegt wurde, eingeblendet wird oder während eines Zeitpunkts während dessen der Firmwarespeicher ausgeblendet wird und damit nicht mehr unmittelbar verfügbar ist.

Eine andere Alternative besteht darin, dass der Umschaltcode im Firmwarespeicher an einer Adresse außerhalb eines vom Arbeitsspeicher umfassten Adressbereichs vorgehalten und dort ausgeführt wird. Alternativ kann der Umschaltcode auch mit dem parallelen Kopieren in den Arbeitsspeicher kopiert werden und zwar an eine Adresse, die beim Einblenden des vom parallelen Kopieren betroffenen Teils des Arbeitsspeichers in dem Adressbereich des Firmwarespeichers nicht betroffen ist. Auch auf diese Art und Weise lässt sich eine Verfügbarkeit des Umschaltcodes während des kompletten Umschaltvorgangs erreichen. Eine nochmals weitere Alternative besteht darin, dass der Umschaltcode von der Firmware umfasst ist und beim parallelen Kopieren erfasst wird, wobei eine Startadresse des Umschaltcodes im Firmwarespeicher nach der Umschaltung der Startadresse des Umschaltcodes im Arbeitsspeicher entspricht. Mit anderen Worten, der Umschaltcode wird im Firmwarespeicher und im Arbeitsspeicher an grundsätzlich gleichen Adressen vorgehalten, so dass zu Beginn der Umschaltung der Umschaltcode aus dem Firmwarespeicher und nach der Umschaltung der Umschaltcode aus dem Arbeitsspeicher ausgeführt wird.

Das eingangs beschriebene und nachfolgend näher erläuterte Verfahren wird bevorzugt in Software implementiert, so dass sich die Erfindung auch auf ein Computerprogramm mit durch einen Computer ausführbaren Programmcodeanweisungen zur Implementierung des Verfahrens bezieht. In gleicher Weise betrifft die Erfindung auch ein Computerprogrammprodukt, insbesondere ein Speichermedium, mit einem durch einen Computer ausführbaren derartigen Computerprogramm. Als Computerprogrammprodukt oder Speichermedium ist hierbei insbesondere diejenige Hardware zu nennen, mit der der Firmwarespeicher realisiert ist und der entweder die Firmware mit der oben beschriebenen Funktionalität bereits umfasst oder in der eine Firmware mit einer solchen Funktionalität implementierbar ist. Damit umfasst die Erfindung schließlich auch ein Automatisierungsgerät mit einem solchen Computerprogrammprodukt, also insbesondere mit einer Hardware, mit der ein Firmwarespeicher der o.g. Art realisiert ist und die eine Firmware mit der oben beschriebenen Funktionalität umfasst oder in der eine solche Firmware implementierbar ist.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten, Elemente und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

Darin zeigen
- FIG 1: Beispiele für das von der Erfindung erfasste Automatisierungsgerät,
- FIG 2: Details zu dem Automatisierungsgerät,
- FIG 3: eine schematisch vereinfachte Darstellung eines durch das Automatisierungsgerät adressierbaren Adressraums während einer ersten Betriebssituation,
- FIG 4: eine Darstellung des Adressraums während einer weiteren Betriebssituation und
- FIG 5: eine spezielle Ausführungsform des Automatisierungsgeräts gemäß FIG 2.

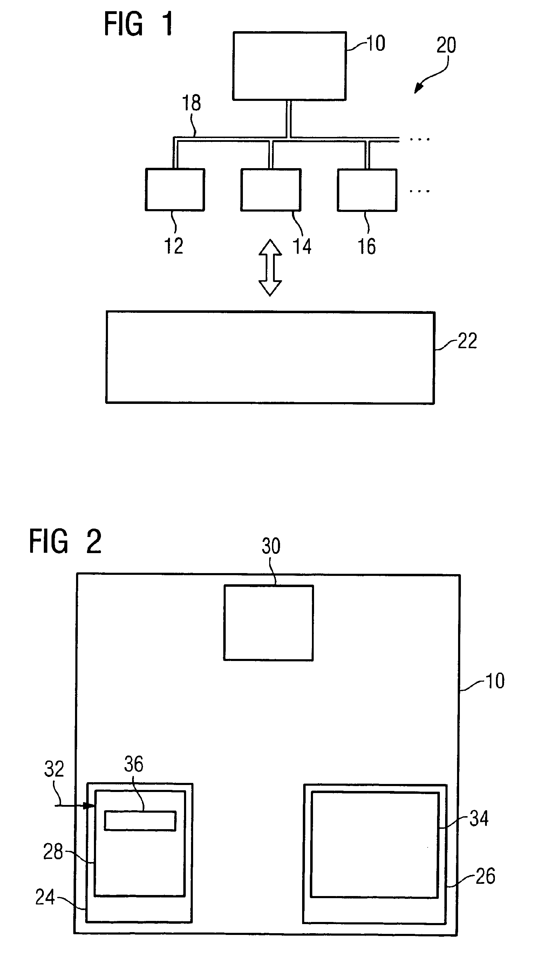

FIG 1 zeigt als Beispiel für ein von der Erfindung erfasstes Automatisierungsgerät einerseits eine so genannte speicherprogrammierbare Steuerung 10 oder ein so genanntes Feldgerät 12, 14, 16, die in an sich bekannter Art und Weise kommunikativ, z.B. über einen Bus 18, miteinander verbunden sind und zusammen ein Automatisierungssystem 20 zur Steuerung und/oder Überwachung eines nicht näher dargestellten technischen Prozesses 22 bilden.

Der Begriff "Automatisierungsgerät" umfasst darüber hinaus sämtliche Geräte, Einrichtungen oder Systeme, also neben z.B.

Steuerungseinrichtungen wie Prozessrechnern, (Industrie-) Computern und dergleichen auch Antriebssteuerungen, Frequenzumrichter und Ähnliches, wie sie zur Steuerung, Regelung und/oder Überwachung technischer Prozesse 22 z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

FIG 2 zeigt am Beispiel der speicherprogrammierbaren Steuerung 10 (vgl. FIG 1) schematisch vereinfacht weitere Details zum Automatisierungsgerät, soweit sie für das Verständnis der vorliegenden Erfindung von Belang sind. Danach umfasst das Automatisierungsgerät einen Firmwarespeicher 24 und einen Arbeitsspeicher 26. Der Firmwarespeicher 24, der z.B. in Form eines so genannten ROMs, insbesondere in Form eines so genannten Flash-ROMs, implementiert ist, umfasst eine Firmware 28. Zur Ausführung von von der Firmware 28 umfassten oder im Arbeitsspeicher 26 vorgehaltenen Programmcodeanweisungen ist in an sich bekannter Art und Weise eine Verarbeitungseinheit, z.B. ein Prozessor 30, vorgesehen. Für den Prozessor 30 wird eine momentan abgearbeitete oder im nächsten Schritt abzuarbeitende Programmcodeanweisung durch einen so genannten Instruction-Pointer 32 referenziert. Der Instruction-Pointer 32 ist in FIG 2 schematisch vereinfacht als Pfeil dargestellt, der auf einen Bereich zu Beginn der Firmware 28 zeigt. Dies repräsentiert eine Situation, wie sie sich im Zusammenhang mit einem Start des Automatisierungsgerätes darstellt, also z.B. beim Einschalten oder bei Wiederkehr der Versorgungsspannung oder nach einem Zurücksetzen des Automatisierungsgerätes. Für eine solche Startsituation ist nämlich für heute übliche Prozessoren eine Startadresse vorgegeben, mit der der Instruction-Pointer 32 initialisiert wird, um definierte Zustände für den Beginn des Betriebes des Prozessors 30 zu gewährleisten. Der Prozessor 30 arbeitet beim Start des Automatisierungsgerätes also zunächst die Firmware 28 aus dem Firmwarespeicher 24 ab, wobei bei Fortschreiten der Bearbeitung der Firmware 28 der Instruction-Pointer 32 voranbewegt wird; man spricht hier von einem Inkrementieren des Instruction-Pointers 32. Wenn also ein Teil der Firmware 28 durch den Prozessor 30 bereits abgearbeitet ist, "zeigt", anders als in FIG 2 dargestellt, der Instruction-Pointer 32 auf den Beginn des noch nicht abgearbeiteten Teils der Firmware 28.

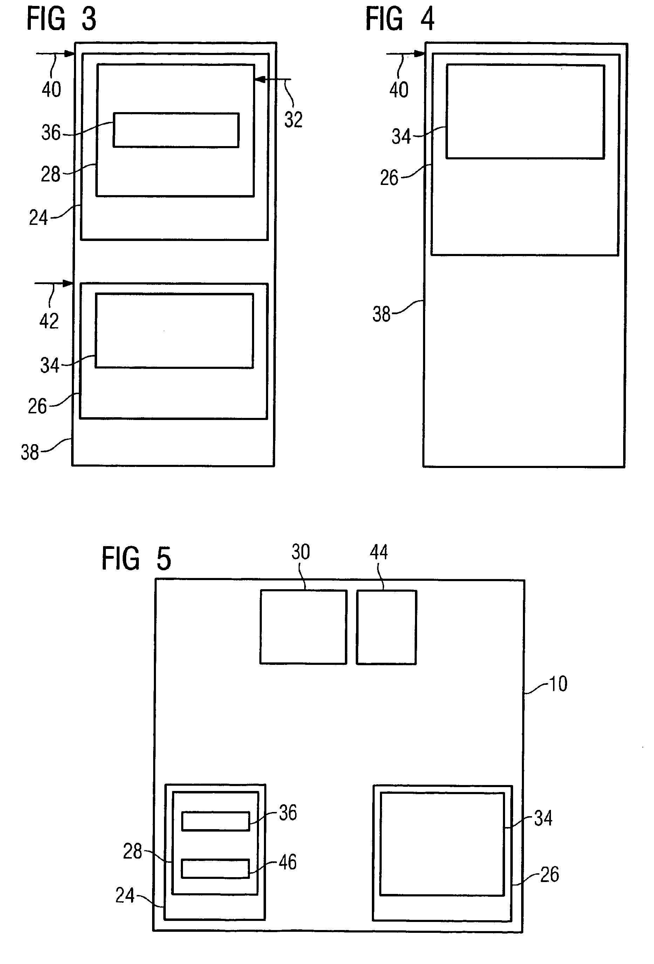

Entsprechend dem Ansatz gemäß der Erfindung ist vorgesehen, dass parallel zur Abarbeitung der Firmware 28 aus dem Firmwarespeicher 24 ein Kopieren der Firmware 28 in den Arbeitsspeicher 26 initiiert wird, hier und im Folgenden als paralleles Kopieren bezeichnet. Das Ergebnis des parallelen Kopierens ist eine Firmwarekopie 34, die ggf. kurz auch einfach als Firmware bezeichnet wird, im Arbeitsspeicher 26. Nach Abschluss des Kopierens wird die Abarbeitung der Firmware 28 durch den Prozessor 30 umgeschaltet, derart, dass sich die Abarbeitung nach der Umschaltung auf die Firmwarekopie 34 im Arbeitsspeicher 26 bezieht. Das Initiieren des parallelen Kopierens in den Arbeitsspeicher 26 umfasst den Start einer diesbezüglichen, von der Firmware 28 umfassten Kopiertask 36, die bevorzugt als Hintergrundtask gestartet wird und insoweit die Abarbeitung sonstiger von der Firmware 28 umfasster Programmcodeanweisungen insbesondere dann unterbricht, wenn aufgrund der Funktionalität, die mit den von der Firmware 28 umfassten Programmcodeanweisungen implementiert wird, z.B. auf externe Signale, z.B. auf eine Rückmeldung von einem anderen Automatisierungsgerät, etwa einem dezentralen Feldgerät 12, 14, 16 (vgl. FIG 1), gewartet wird. Zum parallelen Kopieren ist dabei der Arbeitsspeicher 26 in einen anderen Adressbereich als der Firmwarespeicher 24 eingeblendet. Im Zusammenhang mit einem Abschluss des parallelen Kopierens wird der Arbeitsspeicher 26 oder der vom parallelen Kopieren betroffene Teil des Arbeitsspeichers 26 in den bis dahin vom Firmwarespeicher 24 eingenommenen Adressbereich eingeblendet. Dies ist im Folgenden anhand von FIG 3 schematisch vereinfacht näher dargestellt, wobei ein durch den Prozessor 30 adressierbarer Adressraum 38 ab einer ersten Startadresse 40 den Inhalt des Firmwarespeichers 24 und ab einer zweiten Startadresse 42 den Inhalt des Arbeitsspeichers 26 umfasst. Dadurch, dass Firmwarespeicher 24 und Arbeitsspeicher 26 im Adressraum 38 an unterschiedlichen Startadressen 40, 42 beginnen, ist das parallele Kopieren der Firmware 28 aus dem Firmwarespeicher 24 in den Arbeitsspeicher 26 jederzeit möglich. Im Zusammenhang mit dem Abschluss des Kopierens wird der Arbeitsspeicher 26 oder der vom parallelen Kopieren betroffene Teil des Arbeitsspeichers 26 in den bisher vom Firmwarespeicher 24 eingenommenen Adressbereich eingeblendet. Im Zusammenhang mit dem Einblenden des Arbeitsspeichers 26 in den bisher vom Firmwarespeicher eingenommenen Adressbereich wird der Firmwarespeicher 24 ausgeblendet. Das Einblenden des Arbeitsspeichers 26 in den bisherigen Adressbereich des Firmwarespeichers 24 und das Ausblenden des Firmwarespeichers 24 wird hier und im Folgenden als Umschalten oder Umschaltung bezeichnet. Die Verhältnisse am Ende der Umschaltung sind in FIG 4 dargestellt, wobei der vom Arbeitsspeicher 26 umfasste Adressbereich jetzt ab der ersten Startadresse 40 beginnt, an der zuvor (vgl. FIG 3) der vom Firmwarespeicher 24 umfasste Adressbereich lokatiert war.

Um eine solche Umschaltung zu bewerkstelligen, sieht die Erfindung verschiedene Implementationsmöglichkeiten vor, von denen eine anhand von FIG 5 schematisch vereinfacht dargestellt ist.

FIG 5 zeigt im Wesentlichen die Verhältnisse, die bereits in FIG 2 dargestellt waren. Zusätzlich ist dargestellt, dass dem Prozessor 30 ein Zusatzspeicher 44, z.B. ein so genannter Cash-Speicher oder dergleichen, zugeordnet ist. Des Weiteren ist für die im Firmwarespeicher 24 vorgehaltene Firmware 28 nunmehr dargestellt, dass die davon umfassten Programmcodeanweisungen einen Umschaltcode 46 umfassen, wobei die Ausführung der davon umfassten Programmcodeanweisungen, die in FIG 3 und FIG 4 dargestellte Umschaltung bewirkt. Gemäß einer bevorzugten Ausführungsform ist vorgesehen, dass der für die Umschaltung vorgesehene Umschaltcode zumindest zeitweise im Zusatzspeicher 44 vorgehalten und dort ausgeführt wird. Dazu kann vorgesehen sein, dass im Zusammenhang mit einem Abschluss des parallelen Kopierens, insbesondere unter Kontrolle der Kopiertask 36, die oder jede vom Umschaltcode 46 umfasste Programmcodeanweisung in den Zwischenspeicher 44 kopiert und dort durch den Prozessor 30 ausgeführt wird. Die Verwendung des Zwischenspeichers 44 für die Umschaltung hat den Vorteil, dass der Zwischenspeicher 44 während des kompletten Umschaltvorgangs dauerhaft adressierbar bleibt und die oder jede vom Umschaltcode 46 umfasste Programmcodeanweisung im Zwischenspeicher 44 während des kompletten Umschaltvorgangs ab einer unveränderten Startadresse erreichbar sind.

Alternativ kann auch vorgesehen sein, dass der für die Umschaltung vorgesehene Umschaltcode 46 im Firmwarespeicher 24 an einer Adresse außerhalb eines nach der Umschaltung vom Arbeitsspeicher 26 umfassten Adressbereichs vorgehalten und von dort ausgeführt wird. Nochmals alternativ kann vorgesehen sein, dass der für die Umschaltung vorgesehene Umschaltcode 46 von der Firmware 28 umfasst ist und beim parallelen Kopieren erfasst wird, wobei eine Startadresse des Umschaltcodes 46 im Firmwarespeicher 24 nach der Umschaltung der Startadresse des Umschaltcodes 46 im Arbeitsspeicher 26 entspricht.

Die Implementierung des erfindungsgemäßen Verfahrens erfolgt als Bestandteil der Firmware 28, so dass, soweit die Erfindung ein Computerprogramm mit durch einen Computer ausführbaren Programmcodeanweisungen zur Implementierung des Verfahrens betrifft, die Firmware 28, insbesondere diejenigen Bestandteile der Firmware 28, die die Kopiertask 36 und deren Aufruf sowie den Umschaltcode 46 und dessen Aufruf umfassen, das jeweilige Computerprogramm darstellt. Soweit die Erfindung ein Computerprogrammprodukt, insbesondere ein Speichermedium, mit einem durch einen Computer ausführbaren, derartigen Computerprogramm betrifft, ist als Computerprogrammprodukt bzw. Speichermedium insbesondere diejenige Hardware aufzufassen, mit der der Firmwarespeicher 24 implementiert ist. Soweit die Erfindung schließlich ein Automatisierungsgerät mit einem solchen Computerprogrammprodukt betrifft, sind von dem Begriff Automatisierungsgerät sämtliche vorgenannten Geräte umfasst, die eine Firmware 24 mit der vorgenannten Funktionalität umfassen oder in der eine solche Funktionalität implementierbar ist.

Damit lässt sich die Erfindung kurz wie folgt darstellen: Es wird ein Verfahren zum Betrieb eines Automatisierungsgerätes mit einem Firmwarespeicher 24 und einem Arbeitsspeicher 26 angegeben, bei dem beim Start des Automatisierungsgerätes dieses mit einer Abarbeitung einer Firmware 28 aus dem Firmwarespeicher 24 beginnt, wobei im Zuge dieser Abarbeitung ein paralleles Kopieren der Firmware 28 in dem Arbeitsspeicher 26 initiiert wird und wobei nach Abschluss des Kopierens die Abarbeitung der Firmware 28 umgeschaltet wird, derart, dass sich die Abarbeitung nach der Umschaltung auf den Arbeitsspeicher 26 bezieht. Der Vorteil der Erfindung besteht vor allem darin, dass das Automatisierungsgerät nach dem Start sehr schnell verfügbar ist, da die Firmware 28 anders als bei anderen Ansätzen nicht zunächst in den Arbeitsspeicher 26 geladen werden muss. Wegen der üblicherweise längeren Zugriffszeiten auf Hardware, mit der der Firmwarespeicher 24 implementiert ist, läuft das Automatisierungsgerät noch nicht mit voller Performance. Bereits jetzt wird parallel zur Abarbeitung der Firmware 28 aus dem Firmwarespeicher 24 mit einem parallelen Kopieren der Firmware 28 in den Arbeitsspeicher 26 begonnen. Nach dem parallelen Kopieren der Firmware 28 in den Arbeitsspeicher 26 kann die Firmware 28 aus dem Arbeitsspeicher 26 ausgeführt werden, so dass sich Zugriffszeiten auf die Firmware 28 entsprechend der verringerten Zugriffszeiten auf die Hardware, mit der der Arbeitsspeicher 26 realisiert ist, verringern. Jetzt ist die Firmware 28 mit maximaler Performance verfügbar. Es werden somit im Ergebnis die Vorteile beider bisher im Stand der Technik bekannter Verfahren vereinigt.

## Patentansprüche

1. Verfahren zum Betrieb eines Automatisierungsgerätes mit einem Firmwarespeicher (24) und einem Arbeitsspeicher (26), mit den nachfolgenden Schritten:
beim Start des Automatisierungsgerätes beginnt dieses mit einer Abarbeitung einer Firmware (28) aus dem Firmwarespeicher (24),
**dadurch gekennzeichnet, dass**
im Zuge dieser Abarbeitung ein paralleles Kopieren der Firmware in den Arbeitsspeicher (26) initiiert wird und
nach Abschluss des Kopierens die Abarbeitung der Firmware (28) umgeschaltet wird, derart, dass sich die Abarbeitung nach der Umschaltung auf den Arbeitsspeicher (26) bezieht.

2. Verfahren nach Anspruch 1,
wobei das Initiieren des parallelen Kopierens in den Arbeitsspeicher (26) den Start einer diesbezüglichen Kopiertask (36) umfasst.

3. Verfahren nach Anspruch 2,
wobei die Kopiertask (36) als Hintergrundtask gestartet wird.

4. Verfahren nach einem der Ansprüche 1 bis 3,
wobei während des parallelen Kopierens der Arbeitsspeicher (26) oder ein vom parallelen Kopieren betroffener Teil des Arbeitsspeichers (26) in einen Adressbereich eingeblendet wird, der sich vom Adressbereich des Firmwarespeichers (24) unterscheidet und
wobei im Zusammenhang mit einem Abschluss des parallelen Kopierens der Arbeitsspeicher (26) oder der vom parallelen Kopieren betroffene Teil des Arbeitsspeichers (26) in den Adressbereich des Firmwarespeichers (24) eingeblendet wird.

5. Verfahren nach Anspruch 4,
wobei im Zusammenhang mit dem Einblenden des Arbeitsspeichers (26) oder des vom parallelen Kopieren betroffenen Teils des Arbeitsspeichers (26) in den Adressbereich des Firmwarespeichers (24) der Firmwarespeicher (24) ausgeblendet wird - "Umschaltung".

6. Verfahren nach Anspruch 5,
wobei ein für die Umschaltung vorgesehener Umschaltcode (46) in einem Zusatzspeicher (44) vorgehalten und dort ausgeführt wird.

7. Verfahren nach Anspruch 5,
wobei ein für die Umschaltung vorgesehener Umschaltcode (46) im Firmwarespeicher (24) an einer Adresse außerhalb eines vom Arbeitsspeicher (26) umfassten Adressbereichs vorgehalten und dort ausgeführt wird.

8. Verfahren nach Anspruch 5,
wobei ein für die Umschaltung vorgesehener Umschaltcode (46) von der Firmware (28) umfasst ist und beim parallelen Kopieren erfasst wird und wobei eine Startadresse des Umschaltcodes (46) im Firmwarespeicher (24)nach der Umschaltung der Startadresse des Umschaltcodes (46) im Arbeitsspeicher (26) entspricht.

9. Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

10. Computerprogrammprodukt, insbesondere Speichermedium, mit einem durch einen Computer ausführbaren Computerprogramm gemäß Anspruch 9.

11. Automatisierungsgerät mit einem Computerprogrammprodukt gemäß Anspruch 10.
